# EUROPÄISCHE PATENTSCHRIFT

(11) **EP 3 423 725 B1**
(45) Veröffentlichungstag und Bekanntmachung des Hinweises auf die Patenterteilung: **25.09.2019**
(21) Anmeldenummer: 18708655.8
(22) Anmeldetag: 01.03.2018
(51) Int. Cl.: F16C 33/06, F16C 33/12, F16C 9/02, F16C 9/04, F16C 17/02

(54) **GLEITLAGERELEMENT FÜR MOTORISCHE ANWENDUNGEN**
SLIDING BEARING ELEMENT FOR ENGINE APPLICATIONS
ÉLÉMENT DE PALIER LISSE POUR APPLICATIONS MOTORISÉES

(30) Priorität: 26.05.2017 DE 102017111531
(43) Veröffentlichungstag der Anmeldung: 09.01.2019
(73) Patentinhaber: KS Gleitlager GmbH, 68789 St. Leon-Rot (DE)
(72) Erfinder: GRAUVOGL, Manfred, 26817 Rhauderfehn (DE)
(74) Vertreter: DREISS Patentanwälte PartG mbB
(86) Internationale Anmeldenummer: PCT/EP2018/055010
(87) Internationale Veröffentlichungsnummer: WO 2018/215101

(56) Entgegenhaltungen:
- EP-A2- 1 717 469
- EP-A2- 1 764 522

## Beschreibung

Die Erfindung betrifft einen Gleitlagerverbundwerkstoff zur Herstellung von Gleitlagerelementen für motorische Anwendungen, insbesondere Kurbelwellenlagerschalen und Pleuellagerschalen, mit einer metallischen Stützschicht, insbesondere aus Stahl, mit einer Lagermetallschicht auf Kupferbasis, insbesondere aus Messing oder aus Bronze, oder aus einer hochfesten Aluminiumlegierung, mit einer unmittelbar auf die Lagermetallschicht oder auf eine auf die Lagermetallschicht aufgebrachte Bindeschicht aufgesputterten ersten Aluminium-Zinn-Schicht mit einem Zinnanteil von wenigstens 10 Gew.-%, und mit einer dem Gleitpartner zugewandten Oberflächenschicht aus einem Gleitlack auf Basis eines thermoplastischen Harzes.

Ein derartiger Gleitlagerverbundwerkstoff ist bekannt aus EP 1 764 522 B1.

Bei dem vorbekannten Gleitlagerverbundwerkstoff wurde der Gleitlack direkt auf die einen hohen Zinngehalt aufweisende Aluminium-Zinn-Schicht aufgebracht.

Der vorliegenden Erfindung liegt die Aufgabe zugrunde, die Dauerbelastbarkeit des Gleitlagerverbundwerkstoffs bzw. eines hieraus hergestellten Gleitlagerelements zu erhöhen. Insbesondere soll die Performance im Mischreibungsbereich verbessert werden und ein vorzeitiger Ausfall des Gleitlagerelements verhindert werden.

Diese Aufgabe wird bei einem Gleitlagerverbundwerkstoff der genannten Art erfindungsgemäß dadurch gelöst, dass zwischen der ersten Aluminium-Zinn-Schicht und der Oberflächenschicht aus Gleitlack eine zweite Aluminium-Schicht oder Aluminium-Zinn-Schicht mit einem Zinnanteil von höchstens 5 Gew. % angeordnet ist und dass diese zweite Aluminium-Schicht oder Aluminium-Zinn-Schicht direkt auf die erste Aluminium-Zinn-Schicht aufgesputtert ist und die Oberflächenschicht aus Gleitlack direkt auf die zweite Aluminium-Schicht oder Aluminium-Zinn-Schicht aufgebracht ist. Wenn vorliegend von aufgesputterten Schichten die Rede ist, so bedeutet dies, dass die Schichten in einem Kathodenzerstäubungsverfahren aufgebracht sind, was ihnen ein feinkörniges regelmäßiges Gefüge verleiht.

Mit der vorliegenden Erfindung wurde festgestellt, dass sich bei gattungsgemäßen Gleitlagerverbundwerkstoffen und hieraus hergestellten Gleitlagerelementen ein Problem hinsichtlich der Dauerbelastbarkeit daraus ergeben kann, dass bei der Oberflächenschicht aus Gleitlack insbesondere im Mischreibungsbereich Anhaftungsprobleme zu dem übrigen Schichtenverbund auftreten können. Mit der vorliegenden Erfindung wurde ferner festgestellt, dass durch Zwischenordnung einer zweiten Aluminium-Schicht oder Aluminium-Zinn-Schicht mit gegenüber der ersten sehr viel geringerem Zinnanteil von höchsten 5 Gew.-% derartige Anhaftungsprobleme nicht oder weit weniger auftreten. Die Dauerbelastbarkeit des Gleitlagerelements, und zwar gerade im Mischreibungsbereich, lässt sich hierdurch wesentlich erhöhen, was auf die nunmehr gute Anhaftung der Oberflächenschicht aus Gleitlack an der darunter liegenden zweiten Aluminium-Schicht oder Aluminium-Zinn-Schicht zurückgeführt wird. Hierdurch wird auch die tatsächlich auftretende Reibung reduziert, weil die Oberflächenschicht durchgängig gut haftet und keine Aufwölbungen aufweist. Insbesondere verbessert sich die Performance eines Gleitlagerelements bei Kantentrag, wenn also aufgrund einer Durchbiegung der Welle das Gleitlagerelement besonders im Randbereich druckbeaufschlagt wird. Dies wird auf eine verbesserte Anpassungsfähigkeit des Lagers an die Kurbelwelle aufgrund einer verbesserten Anhaftung der Oberflächenschicht aus Gleitlack zurückgeführt.

Es wird erfinderseitig vermutet, dass Anhaftungsprobleme eines Gleitlacks an Aluminium-Zinn-Schichten mit höherem Zinngehalt darauf zurückzuführen sind, dass derartige Aluminium-Zinn-Schichten - wie erfindungsgemäß festgestellt wurde - zum "Auswachsen" von Zinn neigen, was bedeutet, dass sich an der Oberfläche der Aluminium-Zinn-Schicht Zinnagglomerate bilden, welche die Anhaftung der Oberflächenschicht aus Gleitlack beeinträchtigen. Es wird auch davon ausgegangen, dass sich noch nach der Herstellung des Schichtenverbunds Zinnausscheidungen an der Trennfläche zwischen der Aluminium-Zinn-Schicht und der Oberflächenschicht aus Gleitlack bilden, welche zu Aufwölbungen der Gleitlackschicht führen, und zwar insbesondere wenn die Gleitlackschicht verhältnismäßig dünn, insbesondere im Bereich 5 bis 10 µm, ausgebildet ist. Durch die erfindungsgemäß zwischengeordnete zweite Aluminium-Schicht oder Aluminium-Zinn-Schicht mit sehr geringem Zinngehalt können derartige Zinnausscheidungen weitestgehend oder vollständig reduziert werden, und die Anhaftung der Oberflächenschicht aus Gleitlack wird nicht mehr durch Zinnagglomerate behindert. Es ergibt sich eine auch dauerhaft gute Anhaftung der Oberflächenschicht. Es wird ferner vermutet, dass durch das Ausbleiben von Zinnausscheidungen an der Grenzfläche zur Oberflächenschicht die Oberflächenschicht eine gleichmäßige Schichtdicke aufweist, was den geringeren Reibwert und die bessere Anpassungsfähigkeit an Ungleichmäßigkeiten der Welle erklärt. Die Gleitlackschicht wirkt somit als Druckverteiler, so dass der Schichtverbund insgesamt höher belastbar ist. In ganz besonders vorteilhafter Weise hat sich herausgestellt, dass ein erfindungsgemäßer Gleitlagerverbundwerkstoff bzw. ein hieraus hergestelltes Gleitlagerelement auch bei hochbelasteten Motoren verwendet werden können und zuverlässig hinsichtlich ihrer Dauerbelastbarkeit funktionieren.

Weiter erweist es sich als vorteilhaft, wenn die Lagermetallschicht auf Kupferbasis von einer CuZn(10-30)-Legierung, insbesondere von einer CuZn(18-22)-Legierung, insbesondere von einer CuZn20-Legierung gebildet ist, oder die Lagermetallschicht auf Kupferbasis von einer CuSn(4-10)-Legierung, insbesondere von einer CuSn(4-6)-Legierung gebildet ist.

Weiter erweist es sich als vorteilhaft, wenn die erste Aluminium-Zinn-Schicht von einer AlSn(10-45), insbesondere von einer AlSn(15-30), insbesondere von einer AlSn(25)-Legierung gebildet ist.

Weiter erweist es sich als vorteilhaft, wenn die zweite Aluminium-Schicht oder Aluminium-Zinn-Schicht von einer AlSn(0-5), insbesondere von einer AlSn(0-4), insbesondere von einer AlSn(1-4)-Legierung gebildet ist.

Die Dicke der Lagermetallschicht auf Kupferbasis ist gegenüber den gesputterten Schichten typischerweise sehr groß. Sie liegt bei 100 bis 450 µm.

Die Dicke der ersten Aluminium-Zinn-Schicht beträgt vorteilhafterweise wenigstens 5 µm, insbesondere wenigstens 10 µm, insbesondere wenigstens 12 µm, und weiter höchstens 25 µm, insbesondere höchstens 20 µm, insbesondere höchstens 18 µm.

Die Dicke der zweiten Aluminium-Schicht oder Aluminium-Zinn-Schicht kann vorteilhafterweise wesentlich geringer gewählt werden als die Dicke der ersten Aluminium-Zinn-Schicht. Sie beträgt insbesondere höchstens 5 µm, insbesondere 0,5 - 5 µm, insbesondere 0,5 - 4 µm.

Es hat sich weiter in vorteilhafter Weise gezeigt, dass die Dicke der Oberflächenschicht aus Gleitlack verhältnismäßig gering gewählt werden kann und dennoch eine gute Anpassungswirkung und Druckverteilungswirkung auszuüben vermag. Die Dicke der Oberflächenschicht aus Gleitlack beträgt vorzugsweise höchstens 15 µm, insbesondere höchstens 12 µm, insbesondere höchstens 10 µm und wenigstens 1 µm, insbesondere wenigstens 2 µm.

Vorteilhafterweise ist bei einer bevorzugten Ausführungsform der Erfindung das thermoplastische Harz des Gleitlacks auf Polyimidbasis gebildet ist, und insbesondere auf Polyamidimidbasis (PAI) gebildet. Neben der Harzbasis kann der Gleitlack weiter die tribologischen Eigenschaften verbessernde Füllstoffe umfassen, insbesondere Molybdändisulfid, Wolframdisulfid, Graphit, hexagonales Bornitrid, Eisenoxid (Fe₂O₃), jeweils einzeln oder in Kombination. Er kann weiter metallische Füllstoffe, metalloxidische oder keramische Füllstoffe enthalten.

Weitere Einzelheiten, Merkmale und Vorteile der Erfindung ergeben sich aus den beigefügten Patentansprüchen und aus der zeichnerischen Darstellung und nachfolgenden Beschreibung einer bevorzugten Ausführungsform des erfindungsgemäßen Gleitlagerverbundwerkstoffs.

In der Zeichnung zeigt:
- Figur 1: eine erste Ausführungsform des Schichtaufbaus des erfindungsgemäßen Gleitlagerverbundwerkstoffs;
- Figur 2: eine zweite Ausführungsform des Schichtaufbaus des erfindungsgemäßen Gleitlagerverbundwerkstoffs; und
- Figur 3: eine schematische Darstellung eines erfindungsgemäßen Gleitlagerelements in Form einer Pleuellagerschale für einen Verbrennungsmotor.

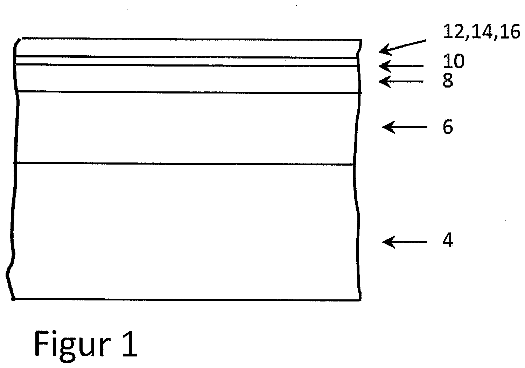

Figur 1 zeigt in schematischer Darstellung und nicht maßstabsgetreu eine Schnittansicht eines erfindungsgemäßen Gleitlagerverbundwerkstoffs 2 zur Herstellung von Gleitlagerelementen für motorische Anwendungen, typischerweise in Form einer Kurbelwellenlagerschale oder einer Pleuellagerschale bei einem Verbrennungsmotor. Der Gleitlagerverbundwerkstoff 2 umfasst eine metallische Stützschicht 4, insbesondere aus Stahl und eine darauf aufgebrachte Lagermetallschicht 6 auf Kupferbasis (Messing oder Bronze) oder auf Basis einer hochfesten Aluminiumlegierung. Auf diese Lagermetallschicht 6 ist bei dem dargestellten Ausführungsbeispiel unmittelbar eine erste Aluminium-Zinn-Schicht 8 aufgesputtert, also in einem Kathodenzerstäubungsverfahren aufgebracht. Sie umfasst einen Zinnanteil von wenigstens 10 Gew.-%, beispielhaft und vorteilhafterweise handelt es sich um eine AlSn25-Legierung. Auf diese erste Aluminium-Zinn-Schicht 8 ist eine zweite Aluminium-Schicht oder Aluminium-Zinn-Schicht 10 als Zwischenschicht aufgebracht, und zwar ebenfalls aufgesputtert. Hierdurch lässt sich bei beiden Aluminium-Schichten oder Aluminium-Zinn-Schichten ein sehr gleichmäßiges Gefüge höchster Qualität erzielen. Auf die zum Gleitpartner hin gewandte Oberseite der zweiten Aluminium-Schicht oder Aluminium-Zinn-Schicht 10 ist eine Oberflächenschicht 12 aus einem Gleitlack 14 auf Basis eines thermoplastischen Harzes 16 aufgebracht. Die Zusammensetzungen der Lagermetallschicht 6, der ersten und zweiten Aluminium-Zinn-Schichten 8, 10 und der Oberflächenschicht 12 aus Gleitlack sowie deren jeweilige Schichtdicke sind entsprechend den Ausführungen der Beschreibungseinleitung der vorliegenden Patentanmeldung gewählt. Eine beispielhafte Zusammensetzung ist wie folgt:
- Lagermetallschicht 6: CuZn20, Dicke 300 µm
- erste Aluminium-Zinn-Schicht: AlSn25, Dicke 15 µm
- zweite Aluminium-Zinn-Schicht 10: AlSn1, Dicke 1 µm
- Oberflächenschicht 12: Gleitlack auf PAI-Basis mit Graphit und MoS₂, Dicke 8 µm.

Es zeigte sich, dass sich durch die Zwischenordnung der zweiten Aluminium-Zinn-Schicht 10 zwischen der ersten Aluminium-Zinn-Schicht 8 mit höherem Zinngehalt und der Oberflächenschicht 12 aus Gleitlack 14 eine verbesserte Anhaftung der Oberflächenschicht 12 aus Gleitlack 14 bei dem Schichtverbund erzielen lässt. Dies wirkt sich auf eine Verbesserung der Dauerbelastbarkeit des Gleitlagerverbundwerkstoffs aus.

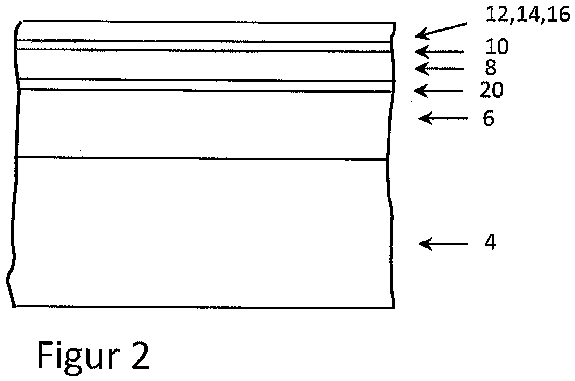

Figur 2 zeigt eine weitere Ausführungsform, bei der die erste Aluminium-Zinn-Schicht 8 nicht unmittelbar auf die Lagermetallschicht 6 aufgesputtert ist, sondern unter Zwischenordnung einer auf die Lagermetallschicht 6 aufgesputterten Zwischenbindungsschicht, insbesondere aus einer Kupfer-Zinn-Nickel-Legierung oder aus Reinnickel oder Nickel-Kupfer-Legierung oder Nickel-Chrom-Legierung.

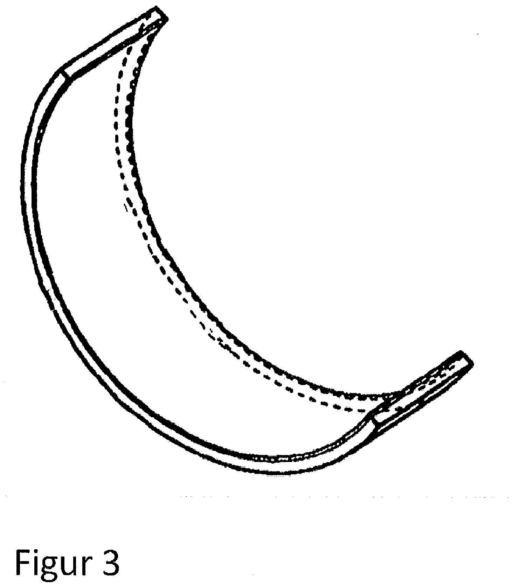

Schließlich zeigt Figur 3 in schematischer Darstellung ein Gleitlagerelement in Form einer Kurbelwellen- oder Pleuellagerschale 30.

## Patentansprüche

1. Gleitlagerverbundwerkstoff (2) zur Herstellung von Gleitlagerelementen für motorische Anwendungen, insbesondere Kurbelwellenlagerschalen und Pleuellagerschalen (30), mit einer metallischen Stützschicht (4), insbesondere aus Stahl, mit einer Lagermetallschicht (6) auf Kupferbasis, insbesondere aus Messing oder aus Bronze, oder aus einer hochfesten Aluminiumlegierung, mit einer unmittelbar auf die Lagermetallschicht (6) oder auf eine auf die Lagermetallschicht (6) aufgebrachte Bindeschicht (20) aufgesputterten ersten Aluminium-Zinn-Schicht (8) mit einem Zinnanteil von wenigstens 10 Gew.-%, und mit einer dem Gleitpartner zugewandten Oberflächenschicht (12) aus einem Gleitlack (14) auf Basis eines thermoplastischen Harzes (16), **dadurch gekennzeichnet, dass** zwischen der ersten Aluminium-Zinn-Schicht (8) und der Oberflächenschicht (12) aus Gleitlack (14) eine zweite Aluminium-Schicht oder Aluminium-Zinn-Schicht (10) mit einem Zinnanteil von höchstens 5 Gew. % angeordnet ist und dass diese zweite Aluminium-Schicht oder Aluminium-Zinn-Schicht (10) direkt auf die erste Aluminium-Zinn-Schicht (8) aufgesputtert ist und die Oberflächenschicht (12) aus Gleitlack direkt auf die zweite Aluminium-Schicht oder Aluminium-Zinn-Schicht (10) aufgebracht ist.

2. Gleitlagerverbundwerkstoff nach Anspruch 1, **dadurch gekennzeichnet, dass** die Lagermetallschicht (6) auf Kupferbasis von einer CuZn(10-30)-Legierung, insbesondere von einer CuZn(18-22)-Legierung, insbesondere von einer CuZn20-Legierung gebildet ist, oder die Lagermetallschicht auf Kupferbasis von einer CuSn(4-10)-Legierung, insbesondere von einer CuSn(4-6) -Legierung gebildet ist.

3. Gleitlagerverbundwerkstoff nach Anspruch 1 oder 2, **dadurch gekennzeichnet, dass** die erste Aluminium-Zinn-Schicht (8) von einer AlSn(10-45), insbesondere von einer AlSn(15-30), insbesondere von einer AlSn(25)-Legierung gebildet ist.

4. Gleitlagerverbundwerkstoff nach Anspruch 1, 2 oder 3, **dadurch gekennzeichnet, dass** die zweite Aluminium-Schicht oder Aluminium-Zinn-Schicht (10) von einer AlSn(0-5), insbesondere von einer AlSn(0-4)-Legierung, insbesondere von einer AlSn(1-4)-Legierung gebildet ist.

5. Gleitlagerverbundwerkstoff nach einem oder mehreren der vorstehenden Ansprüche, **dadurch gekennzeichnet, dass** die Dicke der Lagermetallschicht (6) auf Kupferbasis 100 - 450 µm beträgt.

6. Gleitlagerverbundwerkstoff nach einem oder mehreren der vorstehenden Ansprüche, **dadurch gekennzeichnet, dass** die Dicke der ersten Aluminium-Zinn-Schicht (8) wenigstens 5 µm, insbesondere wenigstens 10 µm, insbesondere wenigstens 12 µm, und weiter höchstens 25 µm, insbesondere höchstens 20 µm, insbesondere höchstens 18 µm beträgt.

7. Gleitlagerverbundwerkstoff nach einem oder mehreren der vorstehenden Ansprüche, **dadurch gekennzeichnet, dass** die Dicke der zweiten Aluminium-Schicht oder Aluminium-Zinn-Schicht (10) höchstens 5 µm, insbesondere 0,5 - 5 µm, insbesondere 0,5 - 4 µm beträgt.

8. Gleitlagerverbundwerkstoff nach einem oder mehreren der vorstehenden Ansprüche, **dadurch gekennzeichnet, dass** die Dicke der Oberflächenschicht (12) aus Gleitlack (14) höchstens 15 µm, insbesondere höchstens 12 µm, insbesondere höchstens 10 µm und wenigstens 1 µm, insbesondere wenigstens 2 µm beträgt.

9. Gleitlagerverbundwerkstoff nach einem oder mehreren der vorstehenden Ansprüche, **dadurch gekennzeichnet, dass** das thermoplastische Harz (16) des Gleitlacks (14) auf Polyimidbasis gebildet ist, und insbesondere auf Polyamidimidbasis (PAI) gebildet ist.

10. Gleitlagerverbundwerkstoff nach einem oder mehreren der vorstehenden Ansprüche, **dadurch gekennzeichnet, dass** der Gleitlack (14) tribologische Eigenschaften verbessernde Füllstoffe umfasst, insbesondere Molybdändisulfid, Wolframdisulfid, Graphit, hexagonales Bornitrid, Eisenoxid (Fe₂O3), jeweils einzeln oder in Kombination.

11. Gleitlagerverbundwerkstoff nach einem oder mehreren der vorstehenden Ansprüche, **dadurch gekennzeichnet, dass** der Gleitlack (14) metallische Füllstoffe, metalloxidische Füllstoffe oder keramische Füllstoffe umfasst.

12. Gleitlagerelement für motorische Anwendungen, insbesondere Kurbelwellenlagerschale oder Pleuellagerschale (30), hergestellt aus einem Gleitlagerverbundwerkstoff nach einem oder mehreren der vorstehenden Ansprüche.

## Claims

1. Sliding bearing composite material (2) for producing sliding bearing elements for engine applications, in particular crankshaft bearing shells and connecting rod bearing shells (30), with a metallic backing layer (4), in particular of steel, with a bearing metal layer (6) based on copper, in particular of brass or of bronze, or of a high strength aluminium alloy, with a first aluminium-tin layer (8) sputtered directly onto the bearing metal layer (6) or onto a bonding layer (20) applied to the bearing metal layer (6), said aluminium-tin layer having a tin content of at least 10 wt.%, and with a surface layer (12) of an antifriction coating (14) based on a thermoplastic resin (16) facing the sliding partner, **characterised in that** a second aluminium layer or aluminium-tin layer (10) with a tin content of at most 5 wt.% is arranged between the first aluminium-tin layer (8) and the surface layer (12) of antifriction coating (14) and **in that** this second aluminium layer or aluminium-tin layer (10) is sputtered directly onto the first aluminium-tin layer (8) and the surface layer (12) of antifriction coating is applied directly to the second aluminium layer or aluminium-tin layer (10).

2. Sliding bearing composite material according to claim 1, **characterised in that** the bearing metal layer (6) based on copper is formed of a CuZn(10-30) alloy, in particular of a CuZn(18-22) alloy, in particular of a CuZn20 alloy, or the bearing metal layer based on copper is formed of a CuSn(4-10) alloy, in particular of a CuSn(4-6) alloy.

3. Sliding bearing composite material according to claim 1 or 2, **characterised in that** the first aluminium-tin layer (8) is formed of an AlSn(10-45), in particular of an AlSn(15-30), in particular of an AlSn(25) alloy.

4. Sliding bearing composite material according to claim 1, 2 or 3, **characterised in that** the second aluminium layer or aluminium-tin layer (10) is formed of an AlSn(0-5), in particular of an AlSn(0-4) alloy, in particular of an AlSn(1-4) alloy.

5. Sliding bearing composite material according to one or more of the preceding claims, **characterised in that** the thickness of the bearing metal layer (6) based on copper amounts to 100 - 450 µm.

6. Sliding bearing composite material according to one or more of the preceding claims, **characterised in that** the thickness of the first aluminium-tin layer (8) amounts to at least 5 µm, in particular at least 10 µm, in particular at least 12 µm, and further to at most 25 µm, in particular at most 20 µm, in particular at most 18 µm.

7. Sliding bearing composite material according to one or more of the preceding claims, **characterised in that** the thickness of the second aluminium layer or aluminium-tin layer (10) amounts to at most 5 µm, in particular 0.5 - 5 µm, in particular 0.5 - 4 µm.

8. Sliding bearing composite material according to one or more of the preceding claims, **characterised in that** the thickness of the surface layer (12) of antifriction coating (14) amounts to at most 15 µm, in particular at most 12 µm, in particular at most 10 µm and at least 1 µm, in particular at least 2 µm.

9. Sliding bearing composite material according to one or more of the preceding claims, **characterised in that** the thermoplastic resin (16) of the antifriction coating (14) is based on polyimide, and in particular on polyamide-imide (PAI).

10. Sliding bearing composite material according to one or more of the preceding claims, **characterised in that** the antifriction coating (14) comprises fillers which improve tribological properties, in particular molybdenum disulfide, tungsten disulfide, graphite, hexagonal boron nitride, iron oxide (Fe₂O₃), in each case individually or in combination.

11. Sliding bearing composite material according to one or more of the preceding claims, **characterised in that** the antifriction coating (14) comprises metallic fillers, metal oxide fillers or ceramic fillers.

12. Sliding bearing element for engine applications, in particular a crankshaft bearing shell or connecting rod bearing shell (30), produced from a sliding bearing composite material according to one or more of the preceding claims.

## Revendications

1. Matériau composite de palier lisse (2) destiné à la fabrication d'éléments de palier lisse pour des utilisations dans un moteur, en particulier des coussinets de vilebrequin et des coussinets de bielle (30), avec une couche de protection métallique (4), en particulier en acier, avec une couche métallique antifriction (6) à base de cuivre, en particulier de laiton ou de bronze, ou d'un alliage d'aluminium haute résistance, avec une première couche d'aluminium-étain (8) déposée par pulvérisation cathodique directement la couche métallique antifriction (6) sur une couche de liaison (20) appliquée sur la couche métallique antifriction (6), ayant une teneur en étain d'au moins 10 % en poids, et ayant une couche de surface (12) faisant face au partenaire de glissement composée d'un vernis de glissement (14) à base d'une résine thermoplastique (16), **caractérisé en ce qu'**entre la première couche d'aluminium-étain (8) et la couche de surface (12) composée de vernis de glissement (14) est agencée une seconde couche d'aluminium ou couche d'aluminium-étain (10) ayant une teneur en étain d'au plus 5 % en poids, et **en ce que** cette seconde couche d'aluminium ou couche d'aluminium-étain (10) est déposée directement par pulvérisation cathodique sur la première couche d'aluminium-étain (8), et la couche de surface (12) composée de vernis de glissement est appliquée directement sur la seconde couche d'aluminium ou couche d'aluminium-étain (10).

2. Matériau composite de palier lisse selon la revendication 1, **caractérisé en ce que** la couche métallique antifriction (6) à base de cuivre est formée d'un alliage CuZn(10-30), en particulier d'un alliage CuZn(18-22), en particulier d'un alliage CuZn20, ou la couche métallique à base de cuivre est formée d'un alliage CuSn(4-10), en particulier d'un alliage CuSn(4-6).

3. Matériau composite de palier lisse selon la revendication 1 ou 2, **caractérisé en ce que** la première couche d'aluminium-étain (8) est formée d'un alliage AlSn(10-45), en particulier d'un alliage AlSn(15-30), en particulier d'un alliage AlSn(25).

4. Matériau composite de palier lisse selon la revendication 1, 2 ou 3, **caractérisé en ce que** la seconde couche d'aluminium ou couche d'aluminium-étain (10) est formée d'un alliage AlSn(0-5), en particulier d'un alliage AlSn 0-4), en particulier d'un alliage AlSn(1-4).

5. Matériau composite de palier lisse selon une ou plusieurs des revendications précédentes, **caractérisé en ce que** l'épaisseur de la couche métallique antifriction (6) à base de cuivre est comprise entre 100 et 450 µm.

6. Matériau composite de palier lisse selon une ou plusieurs des revendications précédentes, **caractérisé en ce que** l'épaisseur de la première couche d'aluminium-étain (8) est d'au moins 5 µm, en particulier d'au moins 10 µm, en particulier d'au moins 12 µm, et d'au plus 25 µm, en particulier d'au plus 20 µm, en particulier d'au plus 18 µm.

7. Matériau composite de palier lisse selon une ou plusieurs des revendications précédentes, **caractérisé en ce que** l'épaisseur de la seconde couche d'aluminium ou couche d'aluminium-étain (10) est d'au plus 5 µm, en particulier de 0,5 à 5 µm, en particulier de 0,5 à 4 µm.

8. Matériau composite de palier lisse selon une ou plusieurs des revendications précédentes, **caractérisé en ce que** l'épaisseur de la couche de surface (12) composée de vernis de glissement (14) est d'au plus 15 µm, en particulier d'au plus 12 µm, en particulier d'au plus 10 µm et d'au moins 1 µm, en particulier d'au moins 2 µm.

9. Matériau composite de palier lisse selon une ou plusieurs des revendications précédentes, **caractérisé en ce que** la résine thermoplastique (16) du vernis de glissement (14) est formée à base de polyimide, en particulier à base de polyamide-imide (PAI).

10. Matériau composite de palier lisse selon une ou plusieurs des revendications précédentes, **caractérisé en ce que** le vernis de glissement (14) comprend des charges améliorant des propriétés tribologiques, en particulier du disulfure de molybdène, du disulfure de tungstène, du graphite, du nitrure de bore hexagonal, de l'oxyde de fer (Fe₂O₃), individuellement ou en combinaison.

11. Matériau composite de palier lisse selon une ou plusieurs des revendications précédentes, **caractérisé en ce que** le vernis de glissement (14) comprend des charges métalliques, des charges à base d'oxyde métallique ou des charges de céramique.

12. Elément de palier lisse pour des utilisations dans un moteur, en particulier dans des coussinets de vilebrequin ou des coussinets de bielle (30), réalisé en un matériau composite de palier lisse selon une ou plusieurs des revendications précédentes.
